# EUROPÄISCHE PATENTSCHRIFT

(11) **EP 2 932 188 B1**
(45) Veröffentlichungstag und Bekanntmachung des Hinweises auf die Patenterteilung: **14.09.2016**
(21) Anmeldenummer: 12810180.5
(22) Anmeldetag: 13.12.2012
(51) Int. Cl.: G01B 21/04, G01D 5/347, G01B 11/02

(54) **GERÄT MIT BEWEGLICHEM GERÄTETEIL, INSBESONDERE KOORDINATENMESSGERÄT ODER WERKZEUGMASCHINE**
DEVICE WITH DISPLACEABLE DEVICE PART, IN PARTICULAR COORDINATE MEASURING DEVICE OR MACHINE TOOL
APPAREIL COMPRENANT UNE PARTIE D'APPAREIL MOBILE, EN PARTICULIER APPAREIL DE MESURE DE COORDONNÉES OU MACHINE-OUTIL

(43) Veröffentlichungstag der Anmeldung: 21.10.2015
(73) Patentinhaber: Carl Zeiss Industrielle Messtechnik GmbH, 73447 Oberkochen (DE)
(72) Erfinder: RUCK, Otto, 73479 Pfahlheim (DE); UHL, Peter, 73485 Unterschneidheim (DE)
(74) Vertreter: Patentanwälte Bressel und Partner mbB
(86) Internationale Anmeldenummer: PCT/EP2012/075460
(87) Internationale Veröffentlichungsnummer: WO 2014/090318

(56) Entgegenhaltungen:
- EP-A1- 1 160 538
- EP-A2- 1 037 020
- DE-A1-102006 009 181
- US-A1- 2004 238 725
- US-A1- 2007 246 646

## Beschreibung

Die Erfindung betrifft ein Gerät, das ein bewegliches Geräteteil hat, nämlich ein Koordinatenmessgerät (KMG) oder eine Werkzeugmaschine. Eine Bewegung des Geräteteils wird von einem Antrieb angetrieben, wobei eine Steuerung mit dem Antrieb verbunden ist, die den Antrieb steuert. Die Erfindung betrifft ferner ein Verfahren zum Betreiben des Geräts.

Koordinatenmessgeräte, bei denen durch eine Bewegung des beweglichen Geräteteils eine Koordinatenmesseinrichtung (insbesondere einen Messkopf) bewegt wird, sind allgemein bekannt, z. B. aus US 2001/013177 A1. Die Erfindung ist jedoch nicht auf eine spezielle Art von KMGs oder Koordinatenmesseinrichtungen (z. B. tastender Messkopf vom schaltenden oder nicht schaltenden Typ) beschränkt.

Das bewegliche Geräteteil, und damit z. B. die Koordinatenmesseinrichtung eines KMG oder das Werkstück-Bearbeitungswerkzeug einer Werkzeugmaschine, ist z. B. geradlinig verfahrbar. Alternativ oder zusätzlich ist das bewegliche Geräteteil z. B. drehbar. Ferner ist es möglich, dass z. B. die Koordinatenmesseinrichtung oder das Bearbeitungswerkzeug entlang mehrerer (z. B. drei senkrecht zueinander verlaufender) Bewegungsachsen verfahrbar ist. In diesem Fall können insbesondere mehrere bewegliche Geräteteile vorhanden sein, die jeweils in Richtung einer der Bewegungsachsen und/oder um eine von insbesondere mehreren Rotationsachsen bewegbar sind.

Beim Vermessen der Koordinaten von Messobjekten mit verfahrbaren Koordinatenmesseinrichtungen und auch beim Bearbeiten von Werkstücken mit Bearbeitungswerkzeugen sind besondere Vorsichtsmaßnahmen zu ergreifen. Zum einen soll das Messobjekt/Werkstück selbst vor mechanischen Beschädigungen geschützt werden, die beim Anschlagen der Koordinatenmesseinrichtung oder des Bearbeitungswerkzeugs entstehen könnten. Zum anderen sind auch Personen und Teile des Geräts und seiner Umgebung vor solchen mechanischen Beschädigungen zu schützen. Daher ist insbesondere die Geschwindigkeit und/oder Positionsänderung der Koordinatenmesseinrichtung oder des Werkzeugs auf sichere Weise, d.h. insbesondere sicher vor Fehlern, zu überwachen. Unter einer Überwachung wird insbesondere ein Vorgang verstanden, der über die Feststellung der Geschwindigkeit und/oder Positionsänderung und über die Nutzung dieser Informationen für den Antrieb hinausgeht. Es handelt sich daher in diesem Sinne z. B. nicht um eine Überwachung, wenn die Geschwindigkeit festgestellt wird (z. B. durch Auswertung des Tachosignals einer Antriebssteuerung oder -regelung) und die Information über die festgestellte Geschwindigkeit lediglich dafür verwendet wird (z. B. durch Vergleich mit einem Geschwindigkeitssollwert) die Geschwindigkeit einzustellen oder zu regeln. Vielmehr wird unter einer Überwachung insbesondere verstanden, dass aus der festgestellten Geschwindigkeit und/oder Positionsänderung Anzeichen für eine fehlerhaft festgestellte Geschwindigkeit und/oder Positionsänderung und/oder Anzeichen für unerwünschte äußere Einflüsse oder gefährliche Situationen ermittelt werden. Ziel der Überwachung ist z. B. die Erkennung oder Vermeidung von Fehlfunktionen des Geräts und/oder die Abwendung von Gefahren für Personen im Umfeld des Geräts. Die Normen IEC 61508 / IEC 61511 betreffen den Sicherheits-Integritätslevel SIL, der durch eine Gefährdungsbeurteilung ermittelt wird.

Die Überwachung kann insbesondere zu einer Sicherungsmaßnahme führen, die über den normalen Betrieb des Geräts hinausgeht. Die Sicherungsmaßnahme ist z. B. die Erzeugung eines Fehlersignals und/oder Warnsignals. Alternativ oder zusätzlich kann z. B. ein vorgegebener Betriebszustand des Antriebs und/oder des beweglichen Teils eingestellt werden. Zum Beispiel kann der Antrieb innerhalb der kürzest möglichen Zeitspanne ab Auslösung der Sicherungsmaßnahme gestoppt werden oder das bewegliche Teil in eine vorgegebene Position verfahren werden.

Neben der Feststellung der Geschwindigkeitshöhe kann die Überwachung auch darauf gerichtet sein, die Überschreitung einer maximal zulässigen Geschwindigkeit, das Erreichen einer vorgegebenen Position durch das bewegliche Geräteteil und/oder den Halt des beweglichen Geräteteils festzustellen. Unter Feststellung einer Positionsänderung wird daher auch verstanden, dass die Position sich so geändert hat, dass die vorgegebene Position erreicht ist.

Es ist üblich, die Position des beweglichen Teils durch einen Positionssignalgeber festzustellen, wobei das Signal z. B. ein inkrementelles oder absolutes Messsignal ist. Das Positionssignal wird an die Steuerung des Geräts oder, soweit eine separate Steuerung des Antriebs des beweglichen Geräteteils vorhanden ist, alternativ an diese Steuerung übermittelt. Durch Verarbeitung der erhaltenen Signale kann die Steuerung weitere Informationen gewinnen, z. B. die Bewegungsbahn und/oder die Bewegungsgeschwindigkeit. Insbesondere kann die Steuerung unter Verwendung der Positionssignale die Bewegung des Geräteteils entsprechend einer Vorgabe steuern und/oder regeln.

Ist lediglich ein Signalgeber vorhanden, der die Position und/oder Geschwindigkeit des beweglichen Geräteteils misst, kann zwar eine Prüfung der Signale auf Plausibilität stattfinden und auch bei nicht plausiblen Signalen eine Sicherungsmaßnahme durchgeführt werden. Allerdings ist das Sicherheitslevel in diesem Fall gering.

Aus WO 2007/098886 und deren Prioritätsanmeldung DE 10 2006 009181 A1 ist es bekannt, aus zwei verschiedenen, voneinander unabhängigen Signalquellen jeweils die Geschwindigkeit der Koordinatenmesseinrichtung eines KMG zu berechnen und/oder zu ermitteln, wobei beide Signalquellen außerdem für den Betrieb des Koordinatenmessgerätes genutzt werden.

Durch eine derartige redundante Gewinnung von Informationen über die Position und/oder Geschwindigkeit des beweglichen Geräteteils kann insbesondere eine wesentlich genauere Überprüfung realisiert werden und/oder können Sicherungsmaßnahmen redundant über separate Informations-Verarbeitungsketten und separate Signalübertragungswege realisiert werden. Zum Beispiel kann eine Sicherungsmaßnahme bereits dann ergriffen werden, wenn lediglich die von einem der Signalgeber erzeugten Signale eine vorgegebene Bedingung erfüllen (z. B. überschreiten der maximal zulässigen Geschwindigkeit).

EP 1 160 538 A1 beschreibt einen Lesekopf einer Positionsmesseinrichtung, z. B. einer Schieblehre.

US 2007/0246646 A1 beschreibt einen optischen Projektionsencoder (OPE) mit einem Emitter-Modul zum Übertragen emittierter optischer Strahlung durch eine Maske auf ein sich bewegendes Objekt und mit einem Detektormodul zum Empfangen reflektierter optischer Strahlung von dem sich bewegenden Objekt.

EP 1 037 020 A2 beschreibt einen optischen Bewegungsdetektor.

US 2004/0238725 A1 beschreibt ein Verfahren zum Verwenden eines Fotosensors als ein Encoder und ein Auslöser bei Produktionsmaschinen. Natürliche Oberflächenmerkmale einer Zielregion werden abgebildet, Daten-Frames der Oberflächenmerkmale werden unter Verwendung des Fotosensors erzeugt, die Daten-Frames werden verarbeitet, um Bewegung der Zielregion zu detektieren und sonst schlafende Produktionskomponenten werden angestoßen, sobald eine Bewegung der Zielregion detektiert wird.

Es ist eine Aufgabe der vorliegenden Erfindung, ein Gerät, nämlich Koordinatenmessgerät oder Werkzeugmaschine, mit einem beweglichen Geräteteil und ein Verfahren zum Betreiben des Geräts anzugeben, die bei geringem zusätzlichen Aufwand für die gerätetechnische Ausstattung bzw. für die Aufbereitung von gewonnenen Messsignalen eine Überwachung des Geräts ermöglichen. Insbesondere soll die korrekte Funktion eines Signalgebers auf einfache Weise erkennbar sein.

Gemäß einem wesentlichen Gedanken der vorliegenden Erfindung wird eine Signalgeber-Einheit verwendet, bzw. eine solche Signalgeber-Einheit als Teil des Geräts vorgesehen, wobei die Einheit eine Strahlungsquelle, eine Matrix aus strahlungsempfindlichenDetektorelementen und einen Signalprozessor zum Verarbeiten von Detektorsignalen der Detektorelemente aufweist. Insbesondere sind die genannten Bauteile der Signalgeber-Einheit und optional weitere Bauteile vorgefertigt und bilden eine einstückige Einheit, die somit auf einfache Weise an dem Gerät zu montieren ist. Insbesondere ist daher auch eine Nachrüstung von bestehenden Geräten auf einfache Weise möglich.

Strahlung, die von der Strahlungsquelle erzeugt wird, kann auf ein relativ zu der Signalgeber-Einheit bewegliches Element des Geräts eingestrahlt werden, sodass die Detektorsignale abhängig von der Relativposition erzeugt werden. Zusätzlich kann der Signalprozessor die erzeugten Detektorsignale der Einheit verarbeiten, aufbereiten und/oder mit Zusatzinformationen versehen. Die von dem Signalprozessor der Einheit erzeugten Ausgangssignale stehen weiteren Einrichtungen des Geräts zur Verfügung, insbesondere einer zentralen Steuerung des Geräts zur Steuerung zumindest eines Antriebs und/oder einer Überwachungseinrichtung zur Überwachung des Gerätebetriebs. Insbesondere kann die zentrale Steuerung auch als die Überwachungseinrichtung ausgestaltet sein.

Dadurch, dass die Strahlungsquelle und die Matrix aus strahlungsempfindlichen Detektorelementen Teil einer gemeinsamen Einheit sind, können sie in optimaler Weise aufeinander abgestimmt sein. Dies gilt insbesondere für die Art der erzeugten Strahlung (insbesondere elektromagnetische Strahlung, z. B. sichtbares Licht und/oder elektromagnetische Strahlung im Infrarot-Wellenlängenbereich) und hinsichtlich der Strahlungsintensität, der räumlichen Verteilung der Strahlungsintensität und der bestrahlten Fläche des relativ zu der Einheit beweglichen Elements bzw. des Raumwinkels, in den die Strahlungsquelle Strahlung emittiert. Ferner kann der Signalprozessor in optimaler Weise auf die Matrix aus strahlungsempfindlichen Detektorelementen abgestimmt sein, insbesondere auf die Anzahl der Detektorelemente und den Wertebereich, in dem die Detektorsignale der Detektorelemente variieren können. Insbesondere ist daher die Rechenleistung des Signalprozessors genau auf die Matrix abgestimmt und optional auch auf die Strahlung aus der Strahlungsquelle, die ggf. den Wertebereich der möglichen Detektorsignale mitbestimmt. Insbesondere kann die Signalgeber-Einheit für einen vorgegebenen Abstand zwischen der Einheit und dem relativ zu der Einheit beweglichen Element des Geräts ausgelegt sein. Befindet sich eine Oberfläche des Elements in dem vorgegebenen Abstand zu der Einheit, wird dementsprechend ein Oberflächenbereich der Einheit mit vorgegebener Größe und bei vorgegebener örtlicher Auflösung von der Matrix aus strahlungsempfindlichen Detektorelementen erfasst.

Dies ermöglicht es z. B., vorgegebene Strukturen des relativ zu der Einheit beweglichen Elements besonders sicher zu erfassen. Zum Beispiel kann der Signalprozessor so programmiert oder ausgestaltet sein, dass er bei Erfassung einer vorgegebenen Struktur an der Oberfläche des Elements ein vorgegebenes Signal erzeugt und ausgibt. Dadurch kann besonders zuverlässig eine vorgegebene Relativposition der Einheit zu dem beweglichen Element erkannt werden. Andere Einrichtungen des Geräts, insbesondere die zentrale Steuerung werden in diesem Teil nicht erheblich mit der Auswertung und Erkennung des Zustandes belastet. Sie muss bzw. müssen lediglich das vorgegebene Ausgangssignal des Signalprozessors erkennen, welches das Vorliegen des Zustandes signalisiert. Entsprechendes gilt jedoch auch für andere Informationen, die aus den Detektorsignalen der Matrix entnommen werden können und für deren Entnahme, d. h., die Erkennung und/oder Aufbereitung dieser Information, für die der Signalprozessor ausgestaltet ist. Zum Beispiel kann ein solcher vorgegebener Betriebszustand der Stillstand des beweglichen Geräteteils sein, d. h., es findet keine Relativbewegung zwischen der Signalgeber-Einheit und dem relativ dazu beweglichen Element des Geräts statt. Für die Erkennung dieses Betriebszustandes kann sogar auf die Einhaltung des vorgegebenen Abstandes zwischen der Signalgeber-Einheit und dem beweglichen Element verzichtet werden bzw. kann dieser Abstand zumindest in gewissen Grenzen variieren. Ein anderes Beispiel für einen vorgegebenen Betriebszustand ist das Überschreiten einer zulässigen MaximalGeschwindigkeit der Relativbewegung der Einheit und des Elements. Wie erwähnt, kann in allen Fällen, in denen die Einheit einen vorgegebenen Betriebszustand des Geräts erkennt, der Signalprozessor ein entsprechendes vorgegebenes Ausgangssignal erzeugen.

Das bewegliche Geräteteil des Geräts ist in der Lage, eine Bewegung relativ zu der Umgebung des Geräts auszuführen. Das erwähnte bewegliche Element des Geräts kann dieses bewegliche Geräteteil sein oder ein Element sein, dessen Bewegung ebenfalls relativ zu der Umgebung ausgeführt wird und durch die Bewegung des beweglichen Geräteteils eindeutig bestimmt ist. Zum Beispiel können das bewegliche Geräteteil und das bewegliche Element über eine Übersetzung und/oder einen Hebel miteinander gekoppelt sein. Alternativ kann jedoch die Signalgeber-Einheit mit dem beweglichen Geräteteil oder einem damit gekoppelten Element verbunden sein und das relativ zu der Signalgeber-Einheit bewegliche Element relativ zu der Umgebung des Geräts ruhen. Ferner ist es möglich, dass sowohl das bewegliche Geräteteil, mit dem die Signalgeber-Einheit verbunden oder gekoppelt ist, als auch das relativ zu der Signalgeber-Einheit bewegliche Element relativ zu der Umgebung des Geräts beweglich sind. Dies ist z. B. dann der Fall, wenn mehrere bewegliche Geräteteile des Geräts vorhanden sind, die wiederum relativ zueinander beweglich sind. Ein Beispiel dafür ist ein konventionelles Koordinatenmessgerät in Portalbauweise mit drei Bewegungsachsen, die jeweils paarweise zueinander senkrecht stehen.

Insbesondere kann es sich bei der Signalgeber-Einheit um eine Einheit einer handelsüblichen optischen Computer-Maus handeln. Beispielsweise werden entsprechende Signalgeber-Einheiten für Computer-Mäuse von Avago Technologies, San Jose, Kalifornien, USA zum Kauf angeboten, z.B. unter den Typenbezeichnungen ADNS-9500 oder ADNS-3080.

Die Matrix aus strahlungsempfindlichen Detektorelementen ist vorzugsweise eine zweidimensionale Matrix mit in Zeilen und Spalten angeordneten Detektorelementen. Es ist jedoch auch möglich, eine Matrix mit lediglich einer Zeile oder einer Spalte aus Detektorelementen zu verwenden. Die Matrix nimmt daher ein- oder zweidimensionale Bilder der Oberfläche des beweglichen Elements auf.

Die Matrix kann auch als Kamera bezeichnet werden und ist insbesondere eine CCD-Kamera bzw. ein CCD-Sensor. Für den Einsatz in einer Signalgeber-Einheit der vorliegenden Erfindung reichen z. B. 15-30 Zeilen und 15-30 Spalten von Detektorelementen aus. Die zu einem bestimmten Zeitpunkt von der Matrix erzeugte Gruppe von Detektorsignalen entspricht somit insbesondere digitalen Bilddaten eines Bildes eines Oberflächenbereichs des relativ zu der Signalgeber-Einheit beweglichen Elements. Zum Beispiel im Fall einer Matrix von 30 x 30 Detektorelementen entstehen Bilder mit 30 x 30 Pixeln. Vorzugsweise wird die Aufnahme von Bildern der Oberfläche des beweglichen Elements regelmäßig wiederholt, zum Beispiel mit einer Bild-Aufnahmefrequenz im Kilohertzbereich, z. B. im Bereich von 1 bis 6 kHz. Der Signalprozessor und/oder die Steuerung können aus einer solchen Folge von Bildern insbesondere die Geschwindigkeit der Relativbewegung von Signalgeber-Einheit und beweglichem Element ermitteln.

Insbesondere weist die Signalgeber-Einheit außerdem ein optisches Linsensystem auf, das insbesondere aus zwei Systemteilen bestehen kann. Der eine Teil richtet die von der Strahlungsquelle erzeugte Strahlung auf den zu erfassenden Oberflächenbereich des beweglichen Elements bzw. richtet die Strahlung in den entsprechenden Raumwinkel, in dem sich der Oberflächenbereich aus Sicht der Strahlungsquelle befindet. Der andere Teil bildet den Oberflächenbereich auf die Matrix und damit die Detektorelemente ab.

Gemäß Anspruch 1 wird vorgeschlagen: Ein Gerät, nämlich Koordinatenmessgerät oder Werkzeugmaschine, wobei das Gerät aufweist:
- ein bewegliches Geräteteil, durch das insbesondere eine Koordinatenmesseinrichtung des Koordinatenmessgeräts oder ein Werkzeug der Werkzeugmaschine bewegbar ist,
- einen Antrieb, der ausgestaltet ist, das bewegliche Geräteteil anzutreiben und dadurch eine Bewegung des beweglichen Geräteteils zu bewirken,
- eine Steuerung, die mit dem Antrieb verbunden ist und ausgestaltet ist, den Antrieb zu steuern,
- einen ersten Signalgeber zur Feststellung einer Position und/oder Geschwindigkeit des beweglichen Geräteteils, wobei der erste Signalgeber und/oder eine mit dem ersten Signalgeber verbundene erste Signal-Auswertungseinrichtung mit der Steuerung verbunden ist, sodass die Steuerung beim Betrieb des Geräts von dem ersten Signalgeber Informationen über die Position und/oder Geschwindigkeit des beweglichen Geräteteils erhält und abhängig von den erhaltenen Informationen den Antrieb steuert,
- einen zweiten Signalgeber zur Überprüfung und/oder redundanten Feststellung der Position und/oder Geschwindigkeit des beweglichen Geräteteils,
- eine Überwachungseinrichtung, die ausgestaltet ist, unter Berücksichtigung von Signalen des zweiten Signalgebers und/oder von daraus abgeleiteten Informationen einen Fehler des Geräts und/oder eine Störung des Betriebes des Geräts zu erkennen,
wobei
- der zweite Signalgeber eine Signalgeber-Einheit aufweist, die eine Strahlungsquelle, eine Matrix aus strahlungsempfindlichen Detektorelementen und einen Signalprozessor zum Verarbeiten von Detektorsignalen der Detektorelemente aufweist,
- die Strahlungsquelle ausgestaltet ist, Strahlung auf ein relativ zu der Signalgeber-Einheit bewegliches Element des Geräts einzustrahlen, sodass die Matrix abhängig von der Relativposition der Signalgeber-Einheit und des beweglichen Elements die Detektorsignale erzeugt, und
- die Überwachungseinrichtung direkt oder indirekt über zumindest eine weitere Einrichtung des Geräts mit dem Signalprozessor verbunden ist.

Wie erwähnt handelt es sich bei dem beweglichen Geräteteil insbesondere um ein Geräteteil, das in Richtung einer Bewegungsachse geradlinig bewegbar ist. Z.B. bei einem Koordinatengerät in Portalbauweise kann das bewegliche Geräteteil daher insbesondere das Portal, ein quer zu den Stützen bzw. Säulen des Portals beweglicher Schlitten oder eine relativ zu dem Schlitten bewegliche Pinole sein. In diesem Fall wird die Koordinatenmesseinrichtung (z.B. ein Messkopf mit einem Taststift zum mechanischen Antasten eines Werkstücks) am unteren Ende der Pinole befestigt. Andere Bauformen von Koordinatenmessgeräten mit einem oder mehreren beweglichen Geräteteilen sind aus dem Stand der Technik bekannt.

Die Steuerung kann eine zentrale Steuerung des Geräts sein, die insbesondere die Bewegung sämtlicher beweglicher Geräteteile steuert und/oder entsprechend Vorgaben eines Benutzers und/oder anderer Vorgaben für die auszuführende Bewegung zumindest die Bewegung eines beweglichen Geräteteils steuert. Die Steuerung kann dabei auf zumindest die Signale des ersten Signalgebers zugreifen, wobei die Signale optional vorher verarbeitet werden können, z.B. um aus den Signalen eines Inkrementalwertgebers die Position und/oder Geschwindigkeit zu ermitteln. Diese Vorverarbeitung kann z.B. von einer Einheit des ersten Signalgebers durchgeführt werden. Die Steuerung muss nicht zwangsläufig durch eine Baugruppe realisiert werden, die zu einer einstückigen Einheit gehört. Vielmehr können die einzelnen Baugruppen (wie z.B. Datenspeicher, Sende- und Empfangseinheit zum Übertragen von Daten, Datenprozessor) auch verteilt über das Gerät realisiert werden. Ferner ist es möglich, dass z.B. mehrere Datenspeicher und/oder mehrere Datenprozessoren vorhanden sind, die zu der Steuerung gehören. Außerdem ist es möglich, dass zusätzliche Steuerungen und/oder Regelungen für die Ausführung der von der zentralen Steuerung vorgegebenen Bewegung vorhanden sind.

Der erste Signalgeber ist insbesondere wie bereits zuvor beschrieben ausgestaltet, z.B. als inkrementeller Messwertgeber. Die von ihm erzeugten Signale sind mit einer ersten Signal-Auswertungseinrichtung und/oder direkt mit der Steuerung des Geräts verbunden. Auf diese Weise erhält die Steuerung direkt oder indirekt über die erste Signal-Auswertungseinrichtung Informationen über die Position und/oder Geschwindigkeit des beweglichen Geräteteils und kann abhängig von den erhaltenen Informationen den Antrieb des beweglichen Geräteteils steuern.

Die Strahlungsquelle weist vorzugsweise zumindest eine Leuchtdiode (LED) auf. Alternativ können andere Strahlungsquellen, wie z.B. Quellen elektrolumineszenter Strahlung, verwendet werden. Eine weitere Ausgestaltung der Strahlungsquelle weist zumindest eine Laser-Diode auf.

Vorzugsweise ist die von der Strahlungsquelle erzeugte Bestrahlungsstärke (d.h. die Strahlungsflussdichte-Verteilung) variierbar, vorzugsweise von einer Steuerung der Signalgeber-Einheit, die insbesondere unter Verwendung desselben Datenprozessors realisiert sein kann, der auch den Signalprozessor bildet.

Die Überwachungseinrichtung ist direkt oder indirekt über zumindest eine weitere Einrichtung des Gerätes mit dem Signalprozessor verbunden. Optional ist die Überwachungseinrichtung auch mit dem ersten Signalgeber oder der ersten Signal-Auswertungseinrichtung oder mit der Steuerung verbunden, sodass die Überwachungseinrichtung nicht nur von dem zweiten Signalgeber, sondern auch von dem ersten Signalgeber jeweils Informationen über die Position und/oder Geschwindigkeit des beweglichen Geräteteils erhält. Die Überwachungseinrichtung und die Steuerung des Geräts können auch durch dieselbe Einheit, z.B. denselben Datenprozessor, realisiert sein. Insbesondere wie oben beschrieben kann die Überwachungseinrichtung ausgestaltet sein, bei Erfüllung einer vorgegebenen Bedingung eine Sicherungsmaßnahme auszuführen.

Ferner wird vorgeschlagen: Ein Verfahren zum Betreiben eines Geräts, wobei:
- eine Position und/oder eine Geschwindigkeit eines beweglichen Geräteteils durch einen ersten Signalgeber erfasst wird,
- Signale des ersten Signalgebers zu einer Steuerung des Geräts übertragen werden und die Steuerung einen Antrieb des Geräteteils abhängig von den durch die Signale des ersten Signalgebers erhaltenen Informationen über die Position und/oder Geschwindigkeit des beweglichen Geräteteils steuert,
- die Position und/oder Geschwindigkeit des beweglichen Geräteteils durch einen zweiten Signalgeber erfasst wird,
- unter Berücksichtigung von Ausgangssignalen des zweiten Signalgebers und/oder von daraus abgeleiteten Informationen ein Fehler des Geräts und/oder eine Störung des Betriebes des Geräts erkannt wird,
wobei
- der zweite Signalgeber als Signalgeber-Einheit betrieben wird, mit einer Strahlungsquelle, einer Matrix aus strahlungsempfindlichen Detektorelementen und einem Signalprozessor,
- Strahlung von der Strahlungsquelle der Signalgeber-Einheit erzeugt wird und auf ein relativ zu dem Signalgeber-Einheit bewegliches Element des Geräts eingestrahlt wird, sodass die Matrix abhängig von der Relativposition der Signalgeber-Einheit und des beweglichen Elements einen Teil der erzeugten Strahlung detektiert und dem entsprechend Detektorsignale erzeugt, und
- die Detektorsignale der Matrix innerhalb der Signalgeber-Einheit zu dem Signalprozessor übertragen werden, der die Ausgangssignale des zweiten Signalgebers ausgibt,
- die Ausgangssignale des zweiten Signalgebers ausgewertet werden und durch die Auswertung gegebenenfalls ein Fehler des Geräts und/oder eine Störung des Betriebes des Geräts erkannt wird.

Insbesondere kann ein Fehler des Geräts erkannt werden, wenn die von der Signalgeber-Einheit und somit von dem zweiten Signalgeber erzeugten Signale auf eine Überschreitung einer zulässigen Maximalgeschwindigkeit schließen lassen und/oder Informationen darüber enthalten, dass die von der Steuerung des Geräts vorgegebene Bewegung nicht oder in anderer Weise stattfindet. In dem zuletzt genannten Fall kann die Ursache für die nicht oder anders ausgeführte Bewegung auch darin liegen, dass der Betrieb des Geräts von außen gestört wird, z.B. durch ein Hindernis (z.B. ein Gegenstand oder ein Körperteil einer Person).

Wie bereits erwähnt führt die Verwendung des zweiten Signalgebers in Form der Signalgeber-Einheit zu einer erhöhten Betriebssicherheit. Die Sicherheit kann nochmals dadurch gesteigert werden, dass die korrekte Funktion der Signalgeber-Einheit überprüft wird. Im Folgenden werden dazu Ausgestaltungen und Funktionen der Signalgeber-Einheit beschrieben, die einzeln oder in beliebiger Kombination miteinander realisiert werden können. Daraus wird ersichtlich, dass die Abstimmung der Komponenten der Signalgeber-Einheit, nämlich Strahlungsquelle, Matrix und Signalprozessor sowie optional Steuerung der Bestrahlungsstärke der Strahlungsquelle, von Vorteil ist und insbesondere die Steuerung des Geräts nicht zusätzlich belastet.

Insbesondere können die Signalgeber-Einheit und das bewegliche Element des Geräts in einer geradlinigen Bewegungsrichtung relativ zueinander beweglich sind, wobei die Matrix aus strahlungsempfindlichen Detektorelementen eine zweidimensionale Matrix ist, die eine Matrixebene aufweist, in der die Detektorelemente in einer Zeilenrichtung und einer Spaltenrichtung der Matrixebene hintereinander angeordnet sind, und wobei eine Parallelprojektion der geradlinigen Bewegungsrichtung auf die Matrixebene eine gerade Linie in der Matrixebene definiert, die die Zeilenrichtung und die Spaltenrichtung unter einem spitzen Winkel schneidet. Bei einer Ausführungsform des Verfahrens werden die Signalgeber-Einheit und das bewegliche Element des Geräts in einer geradlinigen Bewegungsrichtung relativ zueinander bewegt und wird die Matrix aus strahlungsempfindlichen Detektorelementen als eine zweidimensionale Matrix betrieben.

Insbesondere kann die gerade Linie in der Matrixebene die Zeilenrichtung und die Spaltenrichtung unter gleich großen Winkeln schneiden, d.h. insbesondere unter einem Winkel von jeweils 45°, wenn die Zeilenrichtung und die Spaltenrichtung senkrecht zueinander stehen. In diesem Fall ist die bezüglich der Zeilenrichtung gemessene Relativgeschwindigkeit der Signalgeber-Einheit und des beweglichen Elements gleich groß wie die bezüglich der Spaltenrichtung gemessene Relativgeschwindigkeit. Werden daher bezüglich der Spaltenrichtung und bezüglich der Zeilenrichtung verschiedene Geschwindigkeiten ermittelt, lässt dies auf eine Fehlfunktion schließen, z.B. eine Fehlfunktion der Matrix aus Detektorelementen oder eine Fehlfunktion des Signalprozessors. Die Erfindung ist jedoch nicht auf die Ausrichtung mit gleich großen Winkeln zwischen der geraden Linie und der Zeilenrichtung bzw. der Spaltenrichtung beschränkt. Vielmehr kann der Signalprozessor auch bei einer anderen Ausrichtung der geraden Linie durch einfache Multiplikation mit einem konstanten Faktor die in Spaltenrichtung ermittelte Geschwindigkeitskomponente und die in Zeilenrichtung ermittelte Geschwindigkeitskomponente ineinander umrechnen und somit miteinander vergleichen. Es kann auch das Verhältnis der beiden Geschwindigkeitskomponenten gebildet werden und geprüft werden, ob dies einem vorgegebenen konstanten Faktor entsprechend der Ausrichtung der geraden Linie entspricht. Bei Abweichungen von dem erwarteten Ergebnis liegt wiederum ein Hinweis auf eine Fehlfunktion vor. Ein weiterer möglicher Grund für einen Funktionsfehler der Signalgeber-Einheit ist eine Verschmutzung im optischen System, auf den Oberflächen der Strahlungsquelle und der Matrix und/oder im Zwischenraum zwischen der Signalgeber-Einheit und dem beweglichen Element.

Insbesondere ist der Signalprozessor daher ausgestaltet, eine Geschwindigkeit und/oder eine Positionsänderung des beweglichen Elements des Geräts relativ zu der Signalgeber-Einheit bezüglich der Zeilenrichtung und bezüglich der Spaltenrichtung der Matrix jeweils als Ermittlungsergebnis zu ermitteln, wobei das Gerät eine Testeinrichtung aufweist, die ausgestaltet ist, aus einem Vergleich der Ermittlungsergebnisse bezüglich der Zeilenrichtung und bezüglich der Spaltenrichtung zu bestimmen, ob die Signalgeber-Einheit plausible Ergebnisse liefert.

Gemäß einer weiteren Möglichkeit der Prüfung der korrekten Funktion der Signalgeber-Einheit wird die Bestrahlungsstärke der Strahlungsquelle zu Testzwecken variiert, wobei eine Testeinrichtung des Geräts aus einem Vergleich von Detektionsergebnissen der Matrix bei unterschiedlicher Bestrahlungsstärke bestimmt, ob die Signalgeber-Einheit plausible Ergebnisse liefert.

Insbesondere wird die Bestrahlungsstärke vorübergehend auf Null reduziert, vorzugsweise wenn keine Relativbewegung zwischen der Signalgeber-Einheit und dem beweglichen Element stattfindet bzw. wenn die Steuerung keine Relativbewegung vorgibt. Ferner wird vorzugsweise ermittelt, ob sich die von der Matrix aufgenommenen Bilder der Oberfläche des beweglichen Elements vor und nach der Reduktion der Bestrahlungsstärke (oder alternativ oder zusätzlich vor und nach der erneuten Erhöhung der Bestrahlungsstärke) unterscheiden. Wird kein Unterschied der Bilder festgestellt oder ist der Unterschied zu gering gemäß einem vorgegebenen Kriterium, lässt dies auf einen Fehler bei der Übertragung der Detektorsignale von der Matrix zu dem Signalprozessor oder auf einen Fehler des Signalprozessors schließen. Alternativ kann die Bestrahlungsstärke nicht auf Null reduziert werden, sondern auf einen kleineren Wert als für den normalen Betrieb. Auch in diesem Fall müssen sich Unterschiede in den Bildern vor und nach Veränderung der Bestrahlungsstärke ergeben. Z.B. können die beiden Bilder hinsichtlich darin erkennbarer Helligkeitskontraste ausgewertet werden und kann auf einen Fehler geschlossen werden, wenn bei geringerer Bestrahlungsstärke dieselben oder sogar größere Helligkeitskontraste festgestellt werden.

Gemäß einer weiteren Möglichkeit der Prüfung der korrekten Funktion der Signalgeber-Einheit wird aus Detektionsergebnissen der Matrix ein Maß für einen Informationsgehalt von einem Oberflächenbereich des beweglichen Elements bestimmt, der von der Matrix abgebildet wird, wobei eine Testeinrichtung des Geräts aus dem Maß für den Informationsgehalt und aus zumindest einem Vergleichswert bestimmt, ob die Signalgeber-Einheit plausible Ergebnisse liefert.

Die "Testeinrichtung des Geräts" (dies bezieht sich einen, mehrere oder alle oben genannten Fälle) ist insbesondere eine Testeinrichtung der Signalgeber-Einheit und wird vorzugsweise durch den Signalprozessor der Signalgeber-Einheit realisiert.

Insbesondere kann die Anzahl der sichtbaren Strukturen in dem Bild ermittelt werden, z.B. indem die Strukturen durch Unterscheidung von Pixeln mit Hintergrundfarbe und/oder Pixeln anderer Farbe, die auf eine andere Struktur hinweisen, identifiziert werden und dann gezählt werden. Eine andere Möglichkeit besteht darin, die Helligkeitskontraste und/oder Farbkontraste zwischen benachbarten Pixeln in dem Bild zu ermitteln.

Die folgende Ausgestaltung ermöglicht es, eine vordefinierte Relativposition zwischen der Signalgeber-Einheit und dem beweglichen Element sicher zu erkennen. Insbesondere weist das bewegliche Element dazu an einer vorgegebenen Relativposition zu der Signalgeber-Einheit eine für die vorgegebene Relativposition charakteristische Oberflächengestaltung auf. Ferner ist/sind der Signalprozessor, die Überwachungseinrichtung oder eine andere Einrichtung des Geräts ausgestaltet, die vorgegebene Relativposition zu erkennen, wenn die charakteristische Oberflächengestaltung von der Matrix der Signalgeber-Einheit erfasst wird. Insbesondere kann an der vorgegebenen Relativposition eine vorgegebene Struktur vorhanden sein, wobei es sich um eine dreidimensionale Struktur oder um eine zweidimensionale Struktur handeln kann. Z.B. kann auf die eigentliche Oberfläche des Elements eine Schicht aufgebracht sein (z.B. eine Folie), die ein Bild zeigt, welches die vorgegebene Struktur ist. Insbesondere ist es auch möglich, dass das bewegliche Element an verschiedenen Stellen seiner Oberfläche jeweils eine charakteristische Oberflächengestaltung aufweist, wobei sich die Gestaltungen an den verschiedenen Stellen vorzugsweise unterscheiden, um die Stellen und damit die Positionen voneinander unterscheiden zu können.

Insbesondere kann der Signalprozessor einen ersten Signalausgang aufweisen, über den der Signalprozessor während des normalen Betriebes Informationen über die Position, Positionsänderung und/oder Geschwindigkeit ausgibt, insbesondere an die Steuerung des Geräts. Optional kann der Signalprozessor zumindest einen zusätzlichen Ausgang aufweisen, um das Ergebnis einer von ihm durchgeführten Plausibilitätsprüfung (siehe oben) ausgibt und/oder das Erreichen der vorgegebenen Relativposition signalisiert. Dies hat den Vorteil, dass eine andere Einrichtung des Geräts, insbesondere die Steuerung des Geräts, unmittelbar, ohne großen Aufwand für eine Weiterverarbeitung der Informationen, auf nicht plausible Signale und/oder das Erreichen einer vorgegebenen Position (d.h. Relativposition zwischen Signalgeber-Einheit und beweglichem Element) reagieren kann. Z.B. handelt es sich bei der vorgegebenen Relativposition um eine so genannte Sicherheitsposition, die das Gerät in einem Betriebsmodus erreichen soll. Sobald der Signalprozessor das Erreichen dieser Sicherheitsposition signalisiert, kann z.B. der Antrieb des Geräts abgeschaltet werden und/oder können weitere Maßnahmen begonnen werden, für die das Erreichen der Sicherheitsposition Voraussetzung ist.

Ausführungsbeispiele der Erfindung werden nun unter Bezugnahme auf die beigefügte Zeichnung beschrieben. Die einzelnen Figuren der Zeichnung zeigen:
- Fig. 1: ein Koordinatenmessgerät in Portalbauweise,
- Fig. 2: schematisch eine Anordnung von Einheiten eines Geräts mit einem beweglichen Geräteteil zur Erläuterung einer redundanten Ermittlung und Verarbeitung von Informationen über die Bewegung des Geräteteils,
- Fig. 3: ein bewegliches Teil eines Geräts, das relativ zu einem anderen Teil des Geräts entlang einer Linearachse (d.h. geradlinig) verfahrbar ist, wobei an dem beweglichen Teil ein erster Signalgeber und ein zweiter Signalgeber, der Teil einer Signalgeber-Einheit ist oder diese bildet, befestigt sind,
- Fig. 4: ein von einer Matrix aus Detektorelementen einer Signalgeber-Einheit erzeugtes Bild von der Oberfläche eines relativ zu der Signalgeber-Einheit beweglichen Elements zu einem ersten Zeitpunkt,
- Fig. 5: ein Bild wie in Fig. 4, wobei das Bild in Fig. 5 zu einem späteren Zeitpunkt von der Matrix aufgenommen wurde,
- Fig. 6: eine vereinfacht dargestellte Anordnung mit einer Strahlungsquelle, einem optischen System, einer Detektormatrix und einem Signalprozessor, die Teile einer gemeinsamen Signalgeber-Einheit sind, und mit einem Oberflächenbereich eines relativ zu der Signalgeber-Einheit beweglichen Elements und
- Fig. 7: einen Längsschnitt durch ein konkretes Ausführungsbeispiel der in Fig. 6 dargestellten Anordnung.

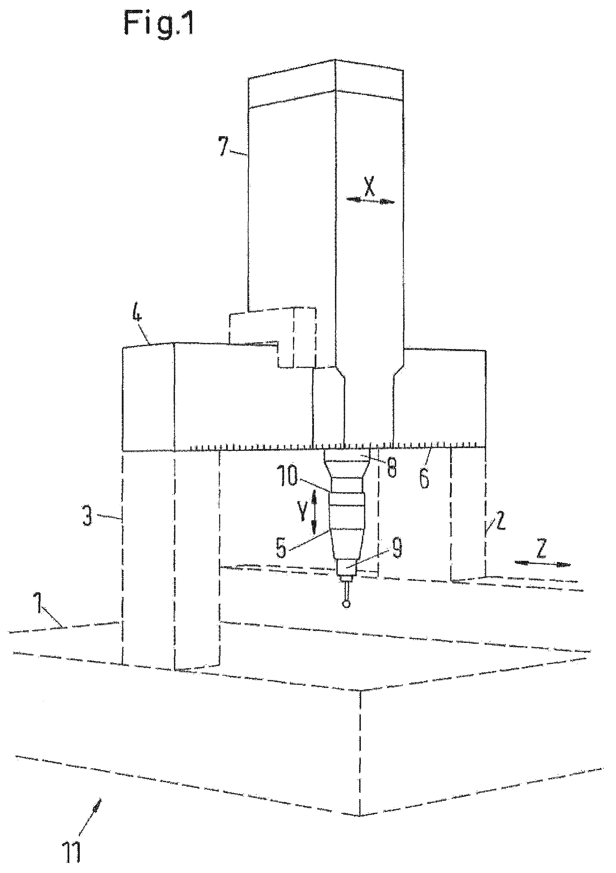

Das in Fig. 1 dargestellte Koordinatenmessgerät (KMG) 11 in Portalbauweise weist einen Messtisch 1 auf, über dem Säulen 2, 3 in Z-Richtung eines kartesischen Koordinatensystems beweglich angeordnet sind. Die Säulen 2, 3 bilden zusammen mit einem Querträger 4 ein Portal des KMG 11. Der Querträger 4 ist an seinen gegenüberliegenden Enden mit den Säulen 2 bzw. 3 verbunden. Nicht näher dargestellte Elektromotoren (Antriebe) verursachen die Linearbewegung der Säulen 2, 3 in Z-Richtung. Dabei ist jeder der beiden Säulen 2, 3 ein Elektromotor zugeordnet.

Der Querträger 4 ist mit einem Querschlitten 7 kombiniert, welcher luftgelagert entlang dem Querträger 4 in X-Richtung des kartesischen Koordinatensystems beweglich ist. Die momentane Position des Querschlittens 7 relativ zu dem Querträger 4 kann anhand einer Maßstabsteilung 6 festgestellt werden. Die Bewegung des Querträgers 4 in X-Richtung wird durch einen weiteren Elektromotor angetrieben.

An dem Querschlitten 7 ist eine in vertikaler Richtung bewegliche Pinole 8 gelagert, die an ihrem unteren Ende über eine Montageeinrichtung 10 mit einer Koordinatenmesseinrichtung 5 verbunden ist. An der Koordinatenmesseinrichtung 5 ist ein Messkopf 9 abnehmbar angeordnet, von dem wiederum ein Taststift nach unten ragt. Die Koordinatenmesseinrichtung 5 kann angetrieben durch einen weiteren Elektromotor relativ zu dem Querschlitten 7 in Y-Richtung des kartesischen Koordinatensystems bewegt werden. Durch die insgesamt vier Elektromotoren kann der Messkopf 9 daher zu jedem Punkt unterhalb des Querträgers 4 und oberhalb des Messtisches 1 verfahren werden, der in dem durch die Säulen 2, 3 definierten Zwischenraum liegt.

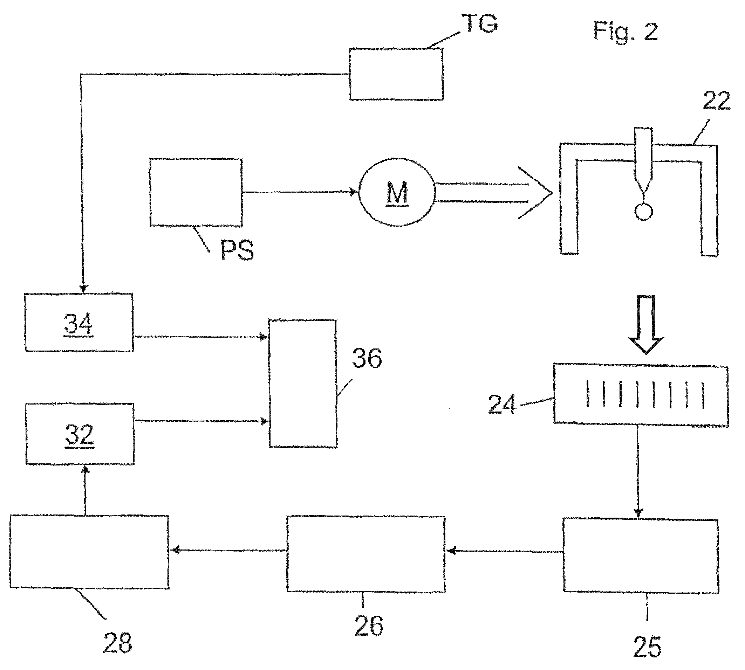

Fig. 2 zeigt schematisch eine Messeinrichtung 22, die bewegt werden kann, um durch Bestimmung einer Position der Messeinrichtung 22 (z.B. der Position eines Tastelementes) Koordinaten eines Messobjekts zu ermitteln. Die Messeinrichtung 22 ist im vorliegenden Ausführungsbeispiel bezüglich dreier, voneinander unabhängiger Linearachsen beweglich. Jede der drei Linearachsen weist einen Inkrementalmaßstab 24 auf. Die Bestimmung der Position der Messeinrichtung 22 bezüglich eines solchen Inkrementalmaßstabes ist an sich aus dem Stand der Technik bekannt (z. B. magnetische oder fotoelektrische Abtastung). Beispielsweise kann die Position wie in der DE 43 03 162 beschrieben unter Verwendung eines inkrementalen fotoelektrischen Messsystems ermittelt werden. Ein Messsystem, das ebenfalls zur Bestimmung der Koordinaten bzw. Positionen eingesetzt werden kann, ist in der WO 87/07944 beschrieben. Es kann ein interferentielles Messprinzip angewendet werden.

Mit dem Bezugszeichen 25 ist in Fig. 2 ein entsprechender erster Signalgeber bezeichnet, der gemäß der aktuellen Position der Messeinrichtung 22 unter Verwendung des Inkrementalmaßstabes 24 ein Positionssignal erzeugt, welches von einem nachgeschalteten Interpolator 26 weiter verarbeitet wird. Der Interpolator 26 liefert auch für Positionen zwischen den Markierungen des Inkrementalmaßstabes 24 gültige Werte, die von einer nachgeschalteten Koordinatenermittlungseinrichtung 28 verwertet werden können.

Die von der Koordinatenermittlungseinrichtung 28 ermittelten Koordinaten (die insbesondere in dem Koordinatensystem der Inkrementalmaßstäbe 24 definiert sind) werden einer Ermittlungseinrichtung 32 zur Ermittlung der Geschwindigkeit eines beweglichen Teils des KMG bezüglich der Linearachse zugeführt. Die Ermittlung der Geschwindigkeit erfolgt insbesondere durch Bildung der zeitlichen Ableitung der einzelnen Koordinaten nach der Zeit.

Außerdem zeigt Fig. 2 einen von mehreren Antriebsmotoren M, die die Messeinrichtung 22 bewegen. Zur Steuerung des Motors M ist eine Leistungsstufe PS vorgesehen. Ferner ist für zumindest eine und vorzugsweise für jede der drei Linearachsen ein zweiter Signalgeber TG als Teil einer Signalgeber-Einheit vorgesehen, die unabhängig von dem ersten Signalgeber ebenfalls Informationen über den Bewegungszustand bezüglich der Linearachse liefert.

Die Detektorsignale des Signalgebers TG werden dem Signalprozessor 34 der Signalgeber-Einheit zugeführt, der aus den Detektorsignalen die Geschwindigkeit eines beweglichen Teils des KMG bezüglich der Linearachse und optional weitere Informationen ermittelt.

Zumindest die von der Ermittlungseinrichtung 32 und von dem Signalprozessor 34 ermittelten Geschwindigkeitswerte werden der zentralen Steuerung 36 des KMG zugeführt, die auch die Bewegung sämtlicher Antriebe des KMG steuert, insbesondere durch Ansteuerung der Leistungsstufe PS.

Durch Auswertung der Geschwindigkeitswerte und optional der weiteren Informationen von dem Signalprozessor 34 kann die Steuerung 36 feststellen, ob ein Fehler des Geräts vorliegt und/oder ob eine Störung des Betriebes vorliegt. Hierzu prüft die Steuerung 36 insbesondere, ob ein vordefiniertes Kriterium erfüllt ist. Z. B. kann festgestellt werden, ob einer der ermittelten Geschwindigkeitswerte zu hoch ist, etwa weil er einen zulässigen Maximalwert überschreitet. Alternativ oder zusätzlich kann festgestellt werden, ob die beiden Geschwindigkeitswerte um mehr als eine vorgegebene zulässige Differenz voneinander abweichen und/oder ob zumindest einer der beiden Geschwindigkeitswerte von einem erwarteten Wert abweicht. Ferner kann die Steuerung 36 die weiteren Informationen gemäß zumindest einem vorgegebenen Kriterium auswerten, zum Beispiel ob eine vorgegebene Position bezüglich der Linearachse erreicht ist und/oder ob die von der Signalgeber-Einheit erzeugten Messsignale plausibel sind. Ist das vorgegebene Kriterium oder eines der vorgegebenen Kriterien erfüllt, kann die Steuerung 36 insbesondere eine Sicherungsmaßnahme auslösen. Dabei ist es möglich, dass den Kriterien jeweils zumindest eine Sicherungsmaßnahme bereits im Vorhinein zugeordnet ist.

Die zuvor beschriebenen Funktionen der Ermittlungseinrichtung 32, des Signalprozessors 34 und der Steuerung 36 können auch bei anderen Ausgestaltungen von Geräten mit beweglichen Geräteteilen realisiert werden.

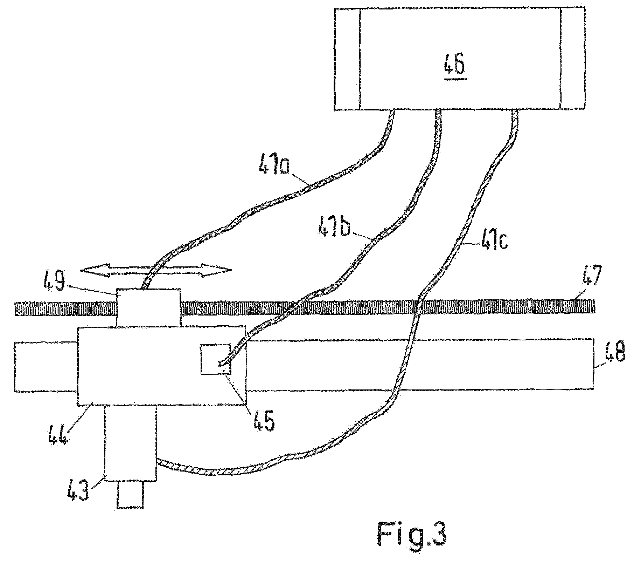

Fig. 3 zeigt ein bewegliches Teil 44 eines Geräts, z.B. des in Fig. 1 dargestellten KMG, das entlang einer Bewegungsführung 48 geradlinig beweglich ist. Die entsprechende Linearachse verläuft in Fig. 3 von rechts nach links. Über der Führung 48 ist ein Maßstab 47, insbesondere ein Inkrementalmaßstab, dargestellt. Ein an dem beweglichen Teil 44 befestigter erster Signalgeber 49 wird bei Bewegung des beweglichen Teils 44 entlang dem Maßstab 47 verfahren und liefert Informationen über die momentane Relativposition von Maßstab 47 und beweglichem Teil 44 bezüglich der Linearachse. Z.B. kann aus den Werten eines als Inkremental-Signalgeber ausgestalteten ersten Signalgebers 49 die Position und Geschwindigkeit ermittelt werden. Die Signale des ersten Signalgebers 49 werden über eine Signalleitung 41 a zu einer Steuerung 46 übertragen. Dabei können die ursprünglichen Detektorsignale des Signalgebers 49 oder bereits weiterverarbeitete Signale übertragen werden.

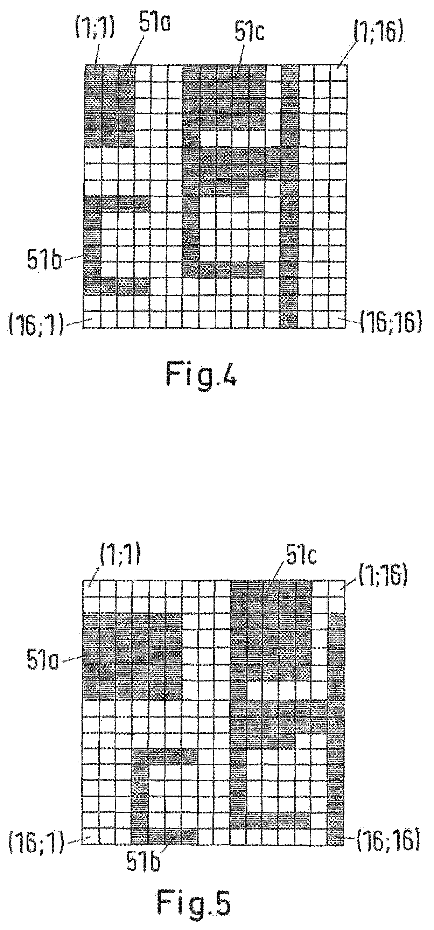

Ferner ist mit dem beweglichen Teil 44 ein zweiter Signalgeber 45 verbunden, der als einstückige Signalgeber-Einheit ausgestaltet ist. Eine Matrix aus Detektorelementen des zweiten Signalgebers 45 ist auf die Oberfläche der Führung 48 gerichtet. In der momentanen Bewegungsposition des beweglichen Teils 44 relativ zu der Führung 48 erzeugt die Matrix zumindest ein Bild eines ihr gegenüberstehenden Oberflächenbereichs der Führung 48. Da die Oberfläche der Führung 48 strukturiert ist und insbesondere Mikrostrukturen aufweist, die in Bildern der Matrix abgebildet werden, können insbesondere vorher bekannte Kombinationen die Geschwindigkeit der Bewegung des beweglichen Teils 44 relativ zu der Führung 48 aus den Detektorsignalen der Matrix ermittelt werden. Auf ein Ausführungsbeispiel wird noch anhand von Fig. 4 und Fig. 5 eingegangen. Die von einem Signalprozessor des zweiten Signalgebers 45 erzeugten Ausgangssignale der Signalgeber-Einheit werden über eine Signalleitung 41 b zu der Steuerung 46 übertragen. Insbesondere kann die Steuerung 46 wie bereits anhand von Fig. 2 erläutert funktionieren.

Ferner ist in Fig. 3 ein Antriebsmotor 43 des beweglichen Teils 44 dargestellt, der die Bewegung des beweglichen Teils 44 entlang der Linearachse antreibt. Der Antriebsmotor 43 wird über eine Steuerleitung 41 c von der Steuerung 46 gesteuert. Das in Fig. 4 dargestellte Bild besteht aus 16 x 16 Pixeln, entsprechend 16 x 16 Detektorelementen einer Matrix aus Detektorelementen, die Teile einer Signalgeber-Einheit mit Strahlungsquelle und Signalprozessor sind. Die Position des einzelnen Pixels und damit entsprechend auch die Position des Detektorelements der Matrix, das den Bildwert (z.B. Graustufenwert oder Farbwert) des Pixels durch sein Detektorsignal geliefert hat, können wie in Fig. 4 dargestellt durch zwei Koordinaten eindeutig bezeichnet werden, wobei die erste Koordinate die Position der Zeile des Pixels und die rechts stehende, zweite Koordinate die Spalte des Pixels bezeichnet. Z.B. wird das Pixel in der achten Zeile und fünfzehnten Spalte durch die Koordinaten (8; 15) bezeichnet.

Das in Fig. 4 dargestellte Bild lässt Strukturen der Oberfläche des Elements erkennen, welches relativ zu der Signalgeber-Einheit beweglich ist. Z.B. befindet sich links oben in dem Bild eine erste Struktur 51 a, die rechteckig ist. Darunter befindet sich eine C-förmige Struktur 51 b. Rechts neben den Strukturen 51 a, 51 b befindet sich eine komplex geformte große Struktur, deren rechter linienartiger Bereich sich über die gesamte Länge der Spalte 13 erstreckt. Der linke Teil dieser großen Struktur 51c ist etwa E-förmig.

Fig. 5 zeigt ein später aufgenommenes Bild der Oberfläche des relativ zu der Signalgeber-Einheit beweglichen Elements. Auch in dem Bild in Fig. 5 sind die Strukturen 51a, 51b, 51c erkennbar, wenn auch in Teilbereichen verändert, da zusätzliche Bereiche der Strukturen 51 a, 51 c von dem Bild erfasst werden. Außerdem ist der untere Bereich des rechten Teils der Struktur 51 c in Fig. 5 nicht erkennbar.

Durch Vergleich der Positionen der Strukturen 51 in den in Fig. 4 und Fig. 5 dargestellten Bildern kann die Verschiebung der Strukturen und damit auch die Positionsänderung der Matrix der Signalgeber-Einheit relativ zu dem beweglichen Element des Geräts ermittelt werden. Durch Berücksichtigung der Zeitdifferenz zwischen den beiden Bildaufnahmen kann daraus die Geschwindigkeit ermittelt werden. Alternativ kann die Geschwindigkeit nicht nur unter Berücksichtigung von zwei, insbesondere unmittelbar aufeinanderfolgend aufgenommenen Bildern der Oberfläche des Elements, sondern durch Auswertung einer Mehrzahl oder Vielzahl aufeinanderfolgender Bilder ermittelt werden. Die Geschwindigkeit ist in diesem Fall gleich der zeitlichen Ableitung der Position.

In dem Fall der Fig. 4 und 5 haben sich die Strukturen 51 um zwei Zeilen nach unten und um drei Spalten nach rechts bewegt. Ist (z.B. durch vorhergehende Kalibrierung) bekannt, welcher Abmessung auf der Oberfläche des relativ zu der Signalgeber-Einheit beweglichen Elements ein Pixel oder das gesamte aufgenommene Bild entspricht, kann auch die absolute Geschwindigkeit und/oder absolute Positionsänderung entlang der Linearachse ermittelt werden.

Im Fall der Bilder in Fig. 4 und Fig. 5 ist die Matrix aus Detektorelementen weder mit ihrer Zeilenrichtung noch mit ihrer Spaltenrichtung in Richtung der Linearachse, also in Bewegungsrichtung, ausgerichtet. Vielmehr ist die Matrix so ausgerichtet, dass die Parallelprojektion der Linearachse diagonal von links oben nach rechts unten (d.h. durch die Pixel 1; 1 und 16; 16) verläuft. Aus diesem Grund haben sich die Strukturen 51 im Wesentlichen in dieser Richtung bewegt, wenn die Differenz der Bilder in Fig. 4 und Fig. 5 betrachtet wird. Abweichungen um ein Pixel sind auf die Bildauflösung zurückzuführen. Wenn jedoch (insbesondere entsprechend einem vorgegebenen Kriterium) größere Unterschiede der Bewegung der Strukturen 51 in Zeilenrichtung und Spaltenrichtung auftreten, kann auf einen Fehler der Signalgeber-Einheit geschlossen werden.

Insbesondere wird dieser "optische Fluss" der Strukturen mit einer Taktrate im Kilohertzbereich aufgenommen, sodass bei handelsüblichen Detektormatrizen im Bereich von 15-30 Detektorelementen pro Zeile und Spalte Beträge von Bewegungsgeschwindigkeiten im Bereich von 0-1 m/s messbar werden. Selbstverständlich sind Bewegungen in der umgekehrten Richtung erkennbar, das heißt das Vorzeichen der Geschwindigkeit ist bestimmbar.

Die Auswertung der Bilder, die von der Matrix geliefert werden, und insbesondere die Berechnung der Geschwindigkeit werden von dem Signalprozessor der Signalgeber-Einheit durchgeführt. Neben einer Auswertung von Graustufenwerten kann alternativ oder zusätzlich auch eine Auswertung von Farbwerten durchgeführt werden.

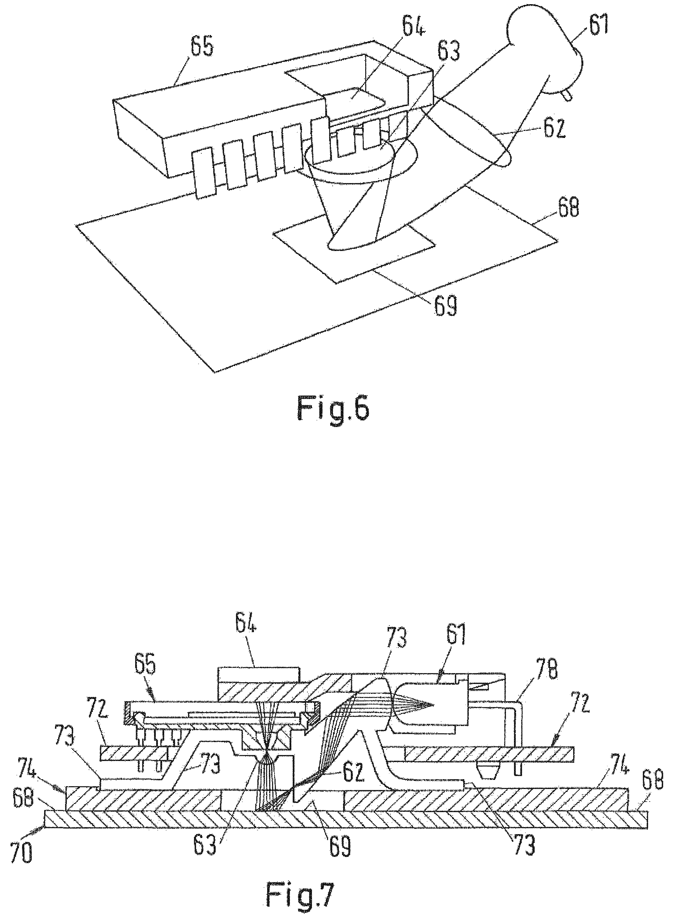

Ein schematisch dargestelltes Beispiel für die Anordnung von Teilen der Signalgeber-Einheit und der zu erfassenden Oberfläche des relativ beweglichen Elements ist in Fig. 6 dargestellt. Allerdings ist die Verbindung der Teile der Signalgeber-Einheit zur bautechnischen Einheit aus Fig. 6 nicht erkennbar.

Licht von der rechts oben in Fig. 6 dargestellten Strahlungsquelle (z.B. eine LED) wird von einer ersten optischen Linse 62 oder einem entsprechenden Linsen- und/oder Reflektorsystem auf den zu erfassenden Bereich 69 der Oberfläche 58 gelenkt und von diesem in Richtung einer zweiten optischen Linse oder eines Linsen- und/oder Reflektorsystems 63 reflektiert, wobei die reflektierte Strahlung abhängig von den optischen Eigenschaften der Oberfläche im zu erfassenden Bereich 69 ist. Auf diese Weise entsteht ein Bild des zu beobachtenden Bereichs 69. Durch die Wirkung der optischen Linse oder des optischen Systems 63 wird das Bild von der Matrix 64 aus Detektorelementen aufgenommen und deren Detektorsignale werden dem Signalprozessor 65 zugeführt. Der Datenprozessor, durch den der Signalprozessor 65 realisiert ist, kann auch die Funktion der Steuerung der Bestrahlungsstärke erfüllen, mit welcher die Strahlungsquelle 61 Strahlung auf den zu erfassenden Oberflächenbereich 69 einstrahlt.

Der in Fig. 7 dargestellte Längsschnitt durch ein konkretes Ausführungsbeispiel der in Fig. 6 dargestellten Anordnung zeigt unten das bewegliche Element 70 mit der Oberfläche 68, die den zu beobachtenden Oberflächenbereich 69 aufweist. Ein Bodenbereich 74 der Signalgeber-Einheit ist in der Praxis vorzugsweise in einem Abstand von z.B. wenigen Zehntel Millimetern zu der Oberfläche 68 angeordnet, sodass eine Relativbewegung zwischen dem Boden 74 und dem Element 70 reibungsfrei stattfinden kann. Alternativ kann die der Oberfläche 68 zugewandte Oberfläche des Bodens 74 durch ein Material gebildet werden, das ein reibungsarmes und weitgehend abriebfreies Gleiten über die Oberfläche 68 ermöglicht.

Der Begriff "Boden" ist nicht so zu verstehen, dass der Boden der Signalgeber-Einheit sich unten befinden muss. Die Ortsangaben "oben" und "unten" beziehen sich lediglich auf die Darstellung in Fig. 7.

Über dem Boden 74 ist in Fig. 7 ein lichtleitender Körper 73 aus transparentem Material dargestellt, wobei Teilbereich des transparenten Körpers 73 die Funktionen des optischen Systems erfüllen. Auf einem Teilbereich des Höhenniveaus, über das sich der transparente Körper 73 erstreckt, erstreckt sich eine Platine 72, z.B. ein so genanntes PCB (Printed Circuit Board). Die Platine 72 trägt zumindest teilweise das Gewicht der elektrischen Komponenten der Einheit, wobei die elektrischen Anschlüsse der elektrischen Komponenten vorzugsweise vollständig über die Platine 72 realisiert sind. Insbesondere weist die Platine 72 eine Aussparung auf, durch die sich Bereiche des transparenten Körpers 73 hindurcherstrecken, sodass die von der Strahlungsquelle 61 erzeugte Strahlung durch Bereiche des transparenten Körpers 73 auf den zu beobachtenden Oberflächenbereich 69 gelenkt werden können und sodass die reflektierte Strahlung durch die Aussparung hindurch gelangen kann und von einem anderen Bereich des transparenten Körpers 73 auf die Matrix gelenkt werden kann.

In dem Ausführungsbeispiel stützt sich der transparente Körper 73 an seinen rechts und links in Fig. 7 dargestellten Endbereichen auf dem Boden 74 ab und verleiht der Anordnung auf diese Weise zusätzliche Stabilität und/oder stellt somit die Verbindung zwischen dem Boden und weiteren Teilen der Einheit her. Über der Platine 72 ist der Datenprozessor 65 angeordnet, der den Signalprozessor und vorzugsweise die Steuerung der Bestrahlungsstärke realisiert. Schematisch sind drei seiner elektrischen Anschlüsse dargestellt, die sich durch die Platine 72 im linken Bereich der Fig. 7 hindurcherstrecken. Ein elektrischer Anschluss 78 der Strahlungsquelle 61 erstreckt sich ebenfalls (rechts in Fig. 7) durch die Platine 72 hindurch. Oberhalb des Datenprozessors 65 ist die Matrix 64 aus Detektorelementen dargestellt.

Beim Betrieb der Einheit wird Strahlung von der Strahlungsquelle 61, wie durch zunächst sich auffächernde Strahlen dargestellt ist, auf eine erste Oberfläche des transparenten Körpers 73 eingestrahlt, die eine Linsenwirkung hat und die Strahlen so umlenkt, dass sie zunächst parallel zueinander verlaufen. An einer weiteren Oberfläche des transparenten Körpers 73 wird diese Strahlung reflektiert und auf eine weitere Reflexionsoberfläche gelenkt, die zu einer zunehmenden Bündelung der Strahlen auf schmaler Breite führt. Anschließend tritt die schmal gebündelte Strahlung aus einem spitz nach unten ragenden Bereich des transparenten Körpers 73 aus und trifft auf den zu beobachtenden Oberflächenbereich 69. Die reflektierte Strahlung trifft auf einen linsenförmigen Bereich 63 des transparenten Körpers 73 und wird auf die Matrix 64 gelenkt.

Neben einer schnellen Bestimmung und Ausgabe der eigentlichen Bewegungsinformationen (Positionsänderung und Geschwindigkeit, z.B. im Kilohertzbereich) durch den Signalprozessor kann vorzugsweise bei sehr viel geringerer Frequenz, z. B. im Bereich von 10 Hz, auch eine Ausgabe von Bildern der Matrix durch den Signalprozessor nach außerhalb der Einheit stattfinden. Die Bildfläche der Matrix beträgt z.B. 1,5 x 1,5 mm bei einer Anzahl von Detektorelementen pro Zeile und Spalte von 30.

## Patentansprüche

1. Gerät, nämlich Koordinatenmessgerät oder Werkzeugmaschine, das aufweist:
• ein bewegliches Geräteteil (44),
• einen Antrieb (43), der ausgestaltet ist, das bewegliche Geräteteil (44) anzutreiben und dadurch eine Bewegung des beweglichen Geräteteils (44) zu bewirken,
• eine Steuerung (46), die mit dem Antrieb (43) verbunden ist und ausgestaltet ist, den Antrieb (43) zu steuern,
• einen ersten Signalgeber (49) zur Feststellung einer Position und/oder Geschwindigkeit des beweglichen Geräteteils (44), wobei der erste Signalgeber (49) und/oder eine mit dem ersten Signalgeber verbundene erste Signal-Auswertungseinrichtung mit der Steuerung (46) verbunden ist, sodass die Steuerung (46) beim Betrieb des Geräts von dem ersten Signalgeber (49) Informationen über die Position und/oder Geschwindigkeit des beweglichen Geräteteils (44) erhält und abhängig von den erhaltenen Informationen den Antrieb (43) steuert,
• einen zweiten Signalgeber zur Überprüfung und/oder redundanten Feststellung der Position und/oder Geschwindigkeit des beweglichen Geräteteils (44),
• eine Überwachungseinrichtung (46), die ausgestaltet ist, unter Berücksichtigung von Signalen des zweiten Signalgebers und/oder von daraus abgeleiteten Informationen einen Fehler des Geräts und/oder eine Störung des Betriebes des Geräts zu erkennen,
**dadurch gekennzeichnet, dass**
• der zweite Signalgeber eine Signalgeber-Einheit (45) aufweist, die eine Strahlungsquelle (61), eine Matrix (64) aus strahlungsempfindlichen Detektorelementen und einen Signalprozessor (65) zum Verarbeiten von Detektorsignalen der Detektorelemente aufweist,
• die Strahlungsquelle (61) ausgestaltet ist, Strahlung auf ein relativ zu der Signalgeber-Einheit (45) bewegliches Element (48) des Geräts einzustrahlen, sodass die Matrix (64) abhängig von der Relativposition der Signalgeber-Einheit (45) und des beweglichen Elements (48) die Detektorsignale erzeugt, und
• die Überwachungseinrichtung (46) direkt oder indirekt über zumindest eine weitere Einrichtung des Geräts mit dem Signalprozessor (65) verbunden ist.

2. Gerät nach Anspruch 1, wobei die Signalgeber-Einheit (45) und das bewegliche Element (48) des Geräts in einer geradlinigen Bewegungsrichtung relativ zueinander beweglich sind, wobei die Matrix (64) aus strahlungsempfindlichen Detektorelementen eine zweidimensionale Matrix (64) ist, die eine Matrixebene aufweist, in der die Detektorelemente in einer Zeilenrichtung und einer Spaltenrichtung der Matrixebene hintereinander angeordnet sind, und wobei eine Parallelprojektion der geradlinigen Bewegungsrichtung auf die Matrixebene eine gerade Linie in der Matrixebene definiert, die die Zeilenrichtung und die Spaltenrichtung unter einem spitzen Winkel schneidet.

3. Gerät nach Anspruch 2, wobei der Signalprozessor (65) ausgestaltet ist, eine Geschwindigkeit und/oder eine Positionsänderung des beweglichen Elements (48) des Geräts relativ zu der Signalgeber-Einheit (45) bezüglich der Zeilenrichtung und bezüglich der Spaltenrichtung der Matrix (65) jeweils als Ermittlungsergebnis zu ermitteln und wobei das Gerät eine Testeinrichtung (46) aufweist, die ausgestaltet ist, aus einem Vergleich der Ermittlungsergebnisse bezüglich der Zeilenrichtung und bezüglich der Spaltenrichtung zu bestimmen, ob die Signalgeber-Einheit (45) plausible Ergebnisse liefert.

4. Gerät nach einem der Ansprüche 1-3, wobei die Signalgeber-Einheit (45) ausgestaltet ist, zu Testzwecken die Bestrahlungsstärke der Strahlungsquelle (61) zu variieren, und wobei das Gerät eine Testeinrichtung (65) aufweist, die ausgestaltet ist, aus einem Vergleich von Detektionsergebnissen der Matrix (64) bei unterschiedlicher Bestrahlungsstärke zu bestimmen, ob die Signalgeber-Einheit (45) plausible Ergebnisse liefert.

5. Gerät nach einem der Ansprüche 1-4, wobei der Signalprozessor (65) ausgestaltet ist, aus Detektionsergebnissen der Matrix (64) ein Maß für einen Informationsgehalt von einem Oberflächenbereich des beweglichen Elements (48) zu bestimmen, der von der Matrix (64) abgebildet wird, und wobei das Gerät eine Testeinrichtung (65) aufweist, die ausgestaltet ist, aus dem Maß für den Informationsgehalt und aus zumindest einem Vergleichswert zu bestimmen, ob die Signalgeber-Einheit (45) plausible Ergebnisse liefert.

6. Gerät nach einem der Ansprüche 1-5, wobei das bewegliche Element (48) an einer vorgegebenen Relativposition zu der Signalgeber-Einheit (45) eine für die vorgegebene Relativposition charakteristische Oberflächengestaltung aufweist und wobei der Signalprozessor (65), die Überwachungseinrichtung (46) oder eine andere Einrichtung des Geräts ausgestaltet ist, die vorgegebene Relativposition zu erkennen, wenn die charakteristische Oberflächengestaltung von der Matrix (64) der Signalgeber-Einheit (45) erfasst wird.

7. Verfahren zum Betreiben eines Geräts, nämlich Koordinatenmessgerät oder Werkzeugmaschine, wobei:
• eine Position und/oder eine Geschwindigkeit eines beweglichen Geräteteils (44) durch einen ersten Signalgeber (49) erfasst wird,
• Signale des ersten Signalgebers (49) zu einer Steuerung (46) des Geräts übertragen werden und die Steuerung (46) einen Antrieb (43) des Geräteteils (44) abhängig von den durch die Signale des ersten Signalgebers (49) erhaltenen Informationen über die Position und/oder Geschwindigkeit des beweglichen Geräteteils (44) steuert,
• die Position und/oder Geschwindigkeit des beweglichen Geräteteils (44) durch einen zweiten Signalgeber erfasst wird,
• unter Berücksichtigung von Ausgangssignalen des zweiten Signalgebers und/oder von daraus abgeleiteten Informationen ein Fehler des Geräts und/oder eine Störung des Betriebes des Geräts erkannt wird,
**dadurch gekennzeichnet, dass**
• der zweite Signalgeber als Signalgeber-Einheit (45) betrieben wird, mit einer Strahlungsquelle (61), einer Matrix (64) aus strahlungsempfindlichen Detektorelementen und einem Signalprozessor (65),
• Strahlung von der Strahlungsquelle (61) der Signalgeber-Einheit (45) erzeugt wird und auf ein relativ zu dem Signalgeber-Einheit (45) bewegliches Element (48) des Geräts eingestrahlt wird, sodass die Matrix (64) abhängig von der Relativposition der Signalgeber-Einheit (45) und des beweglichen Elements (48) einen Teil der erzeugten Strahlung detektiert und dem entsprechend Detektorsignale erzeugt, und
• die Detektorsignale der Matrix (64) innerhalb der Signalgeber-Einheit (45) zu dem Signalprozessor (65) übertragen werden, der die Ausgangssignale des zweiten Signalgebers ausgibt,
• die Ausgangssignale des zweiten Signalgebers ausgewertet werden und durch die Auswertung gegebenenfalls der Fehler des Geräts und/oder die Störung des Betriebes des Geräts erkannt wird.

8. Verfahren nach Anspruch 7, wobei die Signalgeber-Einheit (45) und das bewegliche Element (48) des Geräts in einer geradlinigen Bewegungsrichtung relativ zueinander bewegt werden, wobei die Matrix (64) aus strahlungsempfindlichen Detektorelementen als eine zweidimensionale Matrix (64) betrieben wird, die eine Matrixebene aufweist, in der die Detektorelemente in einer Zeilenrichtung und einer Spaltenrichtung der Matrixebene hintereinander angeordnet sind, und wobei eine Parallelprojektion der geradlinigen Bewegungsrichtung auf die Matrixebene eine gerade Linie in der Matrixebene definiert, die die Zeilenrichtung und die Spaltenrichtung unter einem spitzen Winkel schneidet.

9. Verfahren nach Anspruch 8, wobei der Signalprozessor (65) eine Geschwindigkeit und/oder eine Positionsänderung des beweglichen Elements (48) des Geräts relativ zu der Signalgeber-Einheit (45) bezüglich der Zeilenrichtung und bezüglich der Spaltenrichtung der Matrix (64) jeweils als Ermittlungsergebnis ermittelt und wobei eine Testeinrichtung (65) aus einem Vergleich der Ermittlungsergebnisse bezüglich der Zeilenrichtung und bezüglich der Spaltenrichtung bestimmt, ob die Signalgeber-Einheit (45) plausible Ergebnisse liefert.

10. Verfahren nach einem der Ansprüche 7-9, wobei die Signalgeber-Einheit (45) zu Testzwecken die Bestrahlungsstärke der Strahlungsquelle (61) variiert und wobei eine Testeinrichtung (65) aus einem Vergleich von Detektionsergebnissen der Matrix (64) bei unterschiedlicher Bestrahlungsstärke bestimmt, ob die Signalgeber-Einheit (45) plausible Ergebnisse liefert.

11. Verfahren nach einem der Ansprüche 7-10, wobei der Signalprozessor (65) aus Detektionsergebnissen der Matrix (64) ein Maß für einen Informationsgehalt von einem Oberflächenbereich des beweglichen Elements (48) bestimmt, der von der Matrix (64) abgebildet wird, und wobei eine Testeinrichtung (65) aus dem Maß für den Informationsgehalt und aus zumindest einem Vergleichswert bestimmt, ob die Signalgeber-Einheit (45) plausible Ergebnisse liefert.

12. Verfahren nach einem der Ansprüche 7-11, wobei das bewegliche Element (48) an einer vorgegebenen Relativposition zu der Signalgeber-Einheit (45) eine für die vorgegebene Relativposition charakteristische Oberflächengestaltung aufweist und wobei der Signalprozessor (65), die Überwachungseinrichtung oder eine andere Einrichtung des Geräts, die vorgegebene Relativposition erkennt, wenn die charakteristische Oberflächengestaltung von der Matrix (64) der Signalgeber-Einheit (45) erfasst wird.

## Claims

1. Device, namely a coordinate measuring device or machine tool, having:
• a displaceable device part (44),
• a drive (43) which is designed to drive the displaceable device part (44) and thereby effect a displacement of the displaceable device part (44),
• a control unit (46) which is connected to the drive (43) and is designed to control the drive (43),
• a first signal transmitter (49) to determine a position and/or speed of the displaceable device part (44), wherein the first signal transmitter (49) and/or a first signal evaluation device connected to the first signal transmitter is connected to the control unit (46) so that, during the operation of the device, the control unit (46) receives information from the first signal transmitter (49) relating to the position and/or speed of the displaceable device part (44) and controls the drive (43) depending on the information received,
• a second signal transmitter to check and/or redundantly determine the position and/or speed of the displaceable device part (44),
• a monitoring device (46) which is designed to recognize an error of the device and/or a disruption to the operation of the device, taking account of signals of the second signal transmitter and/or information derived therefrom,
**characterized in that**
• the second signal transmitter has a signal transmitter unit (45) which has a radiation source (61), a matrix (64) of radiation-sensitive detector elements and a signal processor (65) for processing detector signals of the detector elements,
• the radiation source (61) is designed to radiate radiation onto an element (48) of the device displaceable in relation to the signal transmitter unit (45) so that the matrix (64) generates the detector signals depending on the relative position of the signal transmitter unit (45) and the displaceable element (48), and
• the monitoring component (46) is connected directly or indirectly via at least one further component of the device to the signal processor (65).

2. Device according to Claim 1, wherein the signal transmitter unit (45) and the displaceable element (48) of the device are displaceable in a linear direction of displacement in relation to one another, wherein the matrix (64) of radiation-sensitive detector elements is a two-dimensional matrix (64) which has a matrix plane in which the detector elements are disposed one behind the other in a row direction and a column direction of the matrix plane, and wherein a parallel projection of the linear direction of displacement onto the matrix plane defines a straight line in the matrix plane which intersects the row direction and the column direction at a narrow angle.

3. Device according to Claim 2, wherein the signal processor (65) is designed to determine a speed and/or a change of position of the displaceable element (48) of the device in relation to the signal transmitter unit (45) in respect of the row direction and in respect of the column direction of the matrix (65) in each case as a determination result, and wherein the device has a test component (46) which is designed to determine, from a comparison of the determination results in respect of the row direction and in respect of the column direction, whether the signal transmitter unit (45) delivers plausible results.

4. Deevice according to one of Claims 1-3, wherein the signal transmitter unit (45) is designed to vary the radiation intensity of the radiation source (61) for test purposes, and wherein the device has a test component (65) which is designed to determine, from a comparison of detection results of the matrix (64) at different radiation intensities, whether the signal transmitter unit (45) delivers plausible results.

5. Device according to one of Claims 1-4, wherein the signal processor (65) is designed to determine a measure for an information content from a surface area of the displaceable element (48), said surface area being mapped by the matrix (64), from detection results of the matrix (64), and wherein the device has a test component (65) which is designed to determine, from the measure for the information content and from at least one comparison value, whether the signal transmitter unit (45) delivers plausible results.

6. Device according to one of Claims 1-5, wherein the displaceable element (48) has a surface design that is characteristic of the predefined relative position at a predefined position relative to the signal transmitter unit (45) and wherein the signal processor (65), the monitoring component (46) or a different component of the device is designed to recognize the predefined relative position if the characteristic surface design is detected by the matrix (64) of the signal transmitter unit (45).

7. Method for operating a device, namely a coordinate measuring device or machine tool, wherein:
• a position and/or speed of a displaceable device part (44) is detected by a first signal transmitter (49),
• signals of the first signal transmitter (49) are transmitted to a control unit (46) of the device and the control unit (46) controls a drive (43) of the device part (44) depending on the information relating to the position and/or speed of the displaceable device part (44) received by means of the signals of the first signal transmitter,
• the position and/or speed of the displaceable device part (44) is detected by a second signal transmitter;
• an error of the device and/or a disruption to the operation of the device is recognized taking account of output signals of the second signal transmitter and/or information derived therefrom,
**characterized in that**
• the second signal transmitter is operated as a signal transmitter unit (45), with a radiation source (61), a matrix (64) of radiation-sensitive detector elements and a signal processor (65),
• radiation is generated by the radiation source (61) of the signal transmitter unit (45) and is radiated onto an element (48) of the device displaceable in relation to the signal transmitter unit (45), so that the matrix (64) detects a part of the generated radiation depending on the relative position of the signal transmitter unit (45) and the displaceable element (48), and
• the detector signals of the matrix (64) within the signal transmitter unit (45) are transmitted to the signal processor (65) which outputs the output signals of the second signal transmitter,
• the output signals of the second signal transmitter are evaluated and, where appropriate, the error of the device and/or the disruption to the operation of the device are recognized by means of the evaluation.

8. Method according to Claim 7, wherein the signal transmitter unit (45) and the displaceable element (48) of the device are displaceable in a linear direction of displacement in relation to one another, wherein the matrix (64) of radiation-sensitive detector elements is operated as a two-dimensional matrix (64) which has a matrix plane in which the detector elements are disposed one behind the other in a row direction and a column direction of the matrix plane, and wherein a parallel projection of the linear direction of displacement onto the matrix plane defines a straight line in the matrix plane which intersects the row direction and the column direction at a narrow angle.

9. Method according to Claim 8, wherein the signal processor (65) determines a speed and/or a change of position of the displaceable element (48) of the device in relation to the signal transmitter unit (45) in respect of the row direction and in respect of the column direction of the matrix (65) in each case as a determination result, and wherein a test component (46) determines, from a comparison of the determination results in respect of the row direction and in respect of the column direction, whether the signal transmitter unit (45) delivers plausible results.

10. Method according to one of Claims 7-9, wherein the signal transmitter unit (45) varies the radiation intensity of the radiation source (61) for test purposes, and wherein a test component (65) determines, from a comparison of detection results of the matrix (64) at different radiation intensities, whether the signal transmitter unit (45) delivers plausible results.

11. Method according to one of Claims 7-10, wherein the signal processor (65) determines a measure for an information content from a surface area of the displaceable element (48), said surface area being mapped by the matrix (64), from detection results of the matrix (64), and wherein a test component (65) determines, from the measure for the information content and from at least one comparison value, whether the signal transmitter unit (45) delivers plausible results.

12. Method according to one of Claims 7-11, wherein the displaceable element (48) has a surface design that is characteristic of the predefined relative position at a predefined position relative to the signal transmitter unit (45) and wherein the signal processor (65), the monitoring component or a different component of the device recognizes the predefined relative position if the characteristic surface design is detected by the matrix (64) of the signal transmitter unit (45).

## Revendications

1. Équipement, à savoir équipement de mesure des coordonnées ou machine-outil, qui comporte :
• une pièce d'équipement (44) mobile,
• un entraînement (43) qui est conçu pour entraîner la pièce d'équipement (44) mobile et pour provoquer de ce fait un déplacement de la pièce d'équipement (44) mobile,
• un dispositif de commande (46) qui est relié avec l'entraînement (43) et qui est conçu pour commander l'entraînement (43),
• un premier transmetteur de signaux (49) destiné à constater une position et/ou une vitesse de la pièce d'équipement (44) mobile, le premier transmetteur de signaux (49) et/ou un premier dispositif d'évaluation des signaux relié avec le premier transmetteur de signaux étant relié avec le dispositif de commande (46), de sorte que, lors du fonctionnement de l'équipement, le dispositif de commande (46) obtienne de la part du premier transmetteur de signaux (49) des informations sur la position et/ou la vitesse de la pièce d'équipement (44) mobile et commande l'entraînement (43), en fonction des informations obtenues,
• un deuxième transmetteur de signaux, destiné à la vérification et/ou à la constatation redondante de la position et/ou de la vitesse de la pièce d'équipement (44) mobile,
• un dispositif de supervision (46) qui sous considération de signaux du deuxième transmetteur de signaux et/ou d'informations qui en sont déduites, est conçu pour identifier un défaut de l'équipement et/ou une panne de fonctionnement de l'équipement,
**caractérisé en ce que**
• le deuxième transmetteur de signaux comporte une unité (45) de transmission des signaux qui comporte une source de rayonnement (61), une matrice (64) constituée d'éléments détecteurs sensibles au rayonnement et un processeur de signaux (65) destiné à traiter des signaux de détection des éléments détecteurs,
• la source de rayonnement (61) est conçue pour irradier un rayonnement sur un élément (48) de l'équipement qui est mobile par rapport à l'unité (45) de transmission des signaux, de sorte qu'en fonction de la position relative de l'unité (45) de transmission de signaux et de l'élément (48) mobile, la matrice (64) génère les signaux de détection et
• le dispositif de supervision (46) est directement ou indirectement relié par l'intermédiaire d'au moins un dispositif supplémentaire de l'équipement avec le processeur de signaux (65).

2. Équipement selon la revendication 1, l'unité (45) de transmission de signaux et l'élément (48) mobile de l'équipement étant mobiles l'un par rapport à l'autre dans une direction de déplacement rectiligne, la matrice (64) constituée d'éléments de détection sensibles au rayonnement étant une matrice (64) bidimensionnelle, qui comporte un plan de matrice dans lequel les éléments détecteurs sont placés les uns derrière les autres, dans une direction des lignes et dans une direction des colonnes du plan de la matrice et une projection parallèle de la direction de déplacement rectiligne sur le plan de la matrice définissant dans le plan de la matrice une ligne droite qui recoupe la direction des lignes et la direction des colonnes sous un angle aigu.

3. Équipement selon la revendication 2, le processeur (65) de signaux étant conçu pour déterminer une vitesse et/ou un changement de position de l'élément (48) mobile de l'équipement par rapport à l'unité (45) de transmission de signaux au niveau de la direction des lignes et au niveau de la direction des colonnes de la matrice (65) chaque fois en tant que résultat déterminé et l'équipement comportant un dispositif de test (46) qui est conçu pour définir à partir d'une comparaison des résultats déterminés au niveau de la direction des lignes et au niveau de la direction des colonnes si l'unité (45) de transmission de signaux fournit des résultats plausibles.

4. Équipement selon l'une quelconque des revendications 1 - 3, l'unité (45) de transmission de signaux étant conçue pour faire varier à des fins de test l'intensité d'irradiation de la source de rayonnement (61) et l'équipement comportant un dispositif de test (65) qui est conçu pour définir, à une intensité d'irradiation différente, à partir d'une comparaison de résultats de détection de la matrice (64) si l'unité (45) de transmission de signaux fournit des résultats plausibles.

5. Équipement selon l'une quelconque des revendications 1 - 4, le processeur de signaux (65) étant conçu pour définir, à partir de résultats de détection de la matrice (64) une étendue d'une teneur en informations d'une zone superficielle de l'élément (48) mobile qui est reproduite par la matrice (64) et l'équipement comportant un dispositif de test (65) qui est conçu pour définir, à partir de l'étendue de la teneur en informations et à partir d'au moins une valeur comparative, si l'unité (45) de transmission de signaux fournit des résultats plausibles.

6. Équipement selon l'une quelconque des revendications 1 - 5, sur une position relative prédéfinie par rapport à l'unité (45) de transmission de signaux, l'élément (48) mobile présentant une conception de surface caractéristique pour la position relative prédéfinie et le processeur de signaux (65), le dispositif de supervision (46) ou un autre dispositif de l'équipement étant conçus pour identifier la position relative prédéfinie, si la conception de surface caractéristique de la matrice (64) de l'unité (45) de transmission de signaux est détectée.

7. Procédé destiné à faire fonctionner un équipement, à savoir un appareil de mesure des coordonnées ou une machine-outil,
• une position et/ou une vitesse de la pièce mobile (44) de l'équipement étant détectée(s) par un premier transmetteur de signaux (49),
• des signaux du premier transmetteur de signaux (49) étant transmis vers un dispositif de commande (46) de l'équipement et le dispositif de commande (46) commandant un entraînement (43) de la pièce d'équipement (44) en fonction des informations obtenues par les signaux du premier transmetteur de signaux (49) sur la position et/ou la vitesse de la pièce d'équipement (44) mobile,
• la position et/ou la vitesse de la pièce d'équipement (44) mobile étant détectée par un deuxième transmetteur de signaux,
• sous considération de signaux de sortie du deuxième transmetteur de signaux et/ou d'informations déduites de ces derniers, un défaut de l'équipement et/ou une panne de fonctionnement de l'équipement étant détectés,
**caractérisé en ce que**
• le deuxième transmetteur de signaux fonctionne en tant qu'unité (45) de transmission de signaux, avec une source de rayonnement (61), une matrice (64) constituée d'éléments détecteurs sensibles au rayonnement et un processeur de signaux (65),
• un rayonnement est généré par la source de rayonnement (61) de l'unité (45) de transmission de signaux et irradié sur un élément (48) mobile de l'équipement, par rapport à l'unité (45) de transmission de signaux, de sorte qu'en fonction de la position relative de l'unité de transmission de signaux (45) et de l'élément (48) mobile, la matrice (64) détecte une partie du rayonnement généré et génère en conséquence des signaux de détection et
• à l'intérieur de l'unité (45) de transmission de signaux, les signaux de détection de la matrice (64) sont transmis vers le processeur de signaux (65) qui délivre les signaux de sortie du deuxième transmetteur de signaux,
• les signaux de sortie du deuxième transmetteur de signaux sont évalués et par l'évaluation, le cas échéant, le défaut de l'équipement et/ou la panne de fonctionnement de l'équipement sont détectés.

8. Procédé selon la revendication 7, l'unité (45) de transmission de signaux et l'élément (48) mobile de l'équipement étant déplacés l'un par rapport à l'autre dans une direction de déplacement rectiligne, la matrice (64) constituée d'éléments de détection sensibles au rayonnement fonctionnant en tant qu'une matrice (64) bidimensionnelle qui comporte un plan de matrice dans lequel les éléments détecteurs sont placés les uns derrière les autres dans une direction des lignes et dans une direction des colonnes du plan de la matrice et une projection parallèle de la direction de déplacement rectiligne sur le plan de la matrice définissant une ligne droite dans le plan de la matrice qui recoupe la direction des lignes et la direction des colonnes sous un angle aigu.

9. Procédé selon la revendication 8, le processeur de signaux (65) déterminant une vitesse et/ou un changement de position de l'élément (48) mobile de l'équipement par rapport à l'unité (45) de transmission de signaux au niveau de la direction des lignes et au niveau de la direction des colonnes de la matrice (64), chaque fois en tant que résultat déterminé et à partir d'une comparaison des résultats déterminés au niveau de la direction des lignes et au niveau de la direction des colonnes, un dispositif de test (65) définissant si l'unité (45) de transmission de signaux fournit des résultats plausibles.

10. Procédé selon l'une quelconque des revendications 7 - 9, à des fins de test, l'unité (45) de transmission de signaux faisant varier l'intensité d'irradiation de la source de rayonnement (61) et à partir d'une comparaison de résultats de détection de la matrice (64) à différentes intensités d'irradiation, un dispositif de test (65) définissant si l'unité (45) de transmission de signaux fournit des résultats plausibles.

11. Procédé selon l'une quelconque des revendications 7 - 10, à partir de résultats de détection de la matrice (64), le processeur de signaux (65) définissant une étendue pour une teneur en informations d'une zone superficielle de l'élément (48) mobile qui est reproduite par la matrice (64) et à partir de l'étendue de la teneur en informations et à partir d'au moins une valeur comparative, un dispositif de test (65) définissant si l'unité (45) de transmission de signaux fournit des résultats plausibles.

12. Procédé selon l'une quelconque des revendications 7 - 11, sur une position relative prédéfinie par rapport à l'unité (45) de transmission de signaux, l'élément mobile (48) présentant une conception de surface caractéristique pour la position relative prédéfinie et le processeur de signaux (65), le dispositif de supervision ou un autre dispositif identifiant la position relative prédéfinie lorsque la conception de surface caractéristique est détectée par la matrice (64) de l'unité (45) de transmission de signaux.
